## Europäisches Patentamt
## European Patent Office
## Office européen des brevets

(19)

(11) Veröffentlichungsnummer: **0 076 965**
**B1**

(12)

# EUROPÄISCHE PATENTSCHRIFT

(45) Veröffentlichungstag der Patentschrift:
**13.08.86**

(21) Anmeldenummer: **82108953.9**

(22) Anmeldetag. **28.05.82**

(51) Int. Cl.⁴: **F 15 B 9/09**, G 05 B 11/28, G 05 D 3/18

(54) **Regelvorrichtung für ein druckgesteuertes Stellglied.**

(30) Priorität: **10.10.81 DE 3140301**

(43) Veröffentlichungstag der Anmeldung:
**20.04.83 Patentblatt 83/16**

(45) Bekanntmachung des Hinweises auf die Patenterteilung:
**13.08.86 Patentblatt 86/33**

(84) Benannte Vertragsstaaten:
**DE FR GB IT**

(56) Entgegenhaltungen:
**EP-A-0 017 537
FR-A-2 064 899
FR-A-2 130 067
FR-A-2 275 817
US-A-3 763 745
US-A-3 885 644**

(73) Patentinhaber: **ROBERT BOSCH GMBH, Postfach 50, D-7000 Stuttgart 1 (DE)**
Patentinhaber: **PIERBURG GmbH & Co. KG, Leuschstrasse 1, D-4040 Neuss 1 (DE)**

(72) Erfinder: **Ehrentraut, Franz- Josef, Am Tannenbaum 26, D-4050 Münchengladbach (DE)**
Erfinder: **Henning, Manfred, Lange Hecke 12, D-4044 Kaarst (DE)**

(74) Vertreter: **Vetter, Hans, Dr.- Ing., Robert- Bosch- Platz 1, D-7016 Gerlingen- Schillerhöhe (DE)**

EP 0 076 965 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung geht aus von einer Regelvorrichtung nach der Gattung des Hauptanspruchs. Eine derartige Regelvorrichtung zeigt bereits die FR-A-2 064 899 (DE-A-20 47 975). Eine Veränderung des Ansteuersignals während des intermittierenden Betriebes ist dort jedoch nicht vorgesehen. Dies ist zwar prinzipiell aus der US-A-3 763 745 (DE-A-22 56 451) bekannt, doch ermöglicht die dort angegebene Lösung noch nicht die für viele Anwendungsfälle erforderliche Genauigkeit bezüglich der Einstellung von Stellgliedern.

Aufgabe der Erfindung ist es deshalb, eine Regelvorrichtung für die Position eines druckgesteuerten Stellgliedes zu schaffen, die die Einstellung des Tastverhältnisses als Funktion der Regelabweichung sehr exakt ermöglicht und darüber hinaus eine sehr hohe Wegauflösung erreicht wird.

Gelöst wird diese Aufgabe mit einer Merkmalskombination entsprechend des Hauptanspruchs.

## Vorteile der Erfindung

Die erfindungsgemäße Regelvorrichtung mit den kennzeichnenden Merkmalen des Hauptanspruchs hat demgegenüber den Vorteil, daß durch die exakte Variation der Stellkraft eine sehr hohe Wegauflösung erreicht werden kann. Dies vor allem deshalb, weil die Signalbreiten zur Steuerung eines intermittierenden Betriebs der Ventile auch in Abhängigkeit von Funktionen von Istwert und Sollwert gesteuert werden. Auf diese Weise kann ein optimales Steuer- bzw. Regelverhalten erreicht werden.

Durch die in den Unteransprüchen aufgeführten Maßnahmen sind vorteilhafte Weiterbildungen und Verbesserungen der im Hauptanspruch angegebenen Regelvorrichtung möglich. Besonders vorteilhaft ist es, die Übergänge zwischen Arbeitsbereich der Ventilansteuerung mit einer Hysterese auszustatten, wobei einzelne Schaltübergänge zusätzlich noch zeitverzögert erfolgen können.

Ein Ausführungsbeispiel der Erfindung ist in der Zeichnung dargestellt und in der nachfolgenden Beschreibung näher erläutert. Es zeigen

Figur 1 das Ausführungsbeispiel im Blockschaltbild,

Figur 2 ein Signaldiagramm zur Erläuterung der Wirkungsweise im intermittierenden Betrieb,

Figur 3 ein Schaltungsbeispiel für einen hysteresebehafteten Übergang zwischen zwei Betriebsbereichen, und

Figur 4 ein Blockschaltbild zur variablen Bildung der Signalbreiten für den intermittierenden Betrieb.

## Beschreibung des Ausführungsbeispiels

Einer Vergleichsstelle 10 eines Regelkreises ist über eine Leitung 11 ein Sollwert für die Stellung eines Stellglieds 12 und über eine Leitung 13 ein Istwert dieser Stellung zugeführt. Die Regelabweichung ist über einen Regler 14 den Eingängen von vier Schwellwertstufen 15 bis 18 sowie über eine signalmäßig als Block gezeichnete Steuerstufe 19' einem Eingang eines Signalgenerators 19 zugeführt. Der Ausgang der Schwellwertstufe 16, die ein Ausgangssignal bei Überschreiten eines Schwellwerts S1 erzeugt, ist über UND-Gatter 20 und ein nachgeschaltetes ODER-Gatter 21 mit einem die Druckzuführung steuernden Magnetventil 22 des Stellglieds 12 verbunden. Der Ausgang der Schwellwertstufe 15, die ein Ausgangssignal bei Überschreitung eines Schwellwerts S2 erzeugt, ist mit einem weiteren Eingang des ODER-Gatters 21 sowie über einen Inverter 23 mit einem weiteren Eingang des UND-Gatters 20 verbunden. Der Ausgang der Schwellwertstufe 17, die ein Ausgangssignal bei Unterschreitung eines Schwellwerts -S1 erzeugt, ist über ein weiteres UND-Gatter 24 und ein nachgeschaltetes ODER-Gatter 25 mit einem weiteren Magnetventil 26 zur Steuerung der Druckabsenkung im Stellglied 12 verbunden. Der Ausgang der Schwellwertstufe 18, die ein Ausgangssignal bei Unterschreitung eines Schwellwerts -S2 erzeugt, ist mit einem weiteren Eingang des ODER-Gatters 25 sowie über einen Inverter 27 mit einem weiteren Eingang des UND-Gatters 24 verbunden. Der Ausgang des Signalgenerators 19 ist an je einem weiteren Eingang der UND-Gatter 20, 24 angeschlossen. Das Gehäuse 28 des Stellglieds 12 ist durch eine Membran 29 geteilt, die zusammen mit der Gehäusewandung, an der sich die Druckzu- bzw. Druckabführungsleitungen 30, 31 befinden, eine Druckkammer 32 bilden. An der Membran 29 ist ein Stellhebel 33 befestigt, durch den die Stellbefehle in Bewegungen umgesetzt werden. Zur Istwert-Erfassung der Stellung des Stellhebels 33 ist dieser mit einem Istwert-Potentiometer 34 verbunden, dessen Signal über die Leitung 13 der Vergleichsstelle 10 zugeführt ist.

Die Druckabführungsleitung 31 ist dabei vorzugsweise mit einem evakuierendem System und die Druckzuführungsleitung 30 mit dem Außendruck verbunden. Ebenso möglich wäre natürlich die Verbindung der Druckzuführungsleitung 30 mit einer Druckquelle und die Druckabführungsleitung 31 mit dem Außendruck. Weiterhin wären zwei verschiedene Druckquellen bzw. zwei verschiedene evakuierende Systeme zur Druckbeaufschlagung möglich. Andere pneumatische oder hydraulische Stellglieder, die Druckzuführungs- und Druckabführungsleitungen aufweisen, können hier ebenfalls analog eingesetzt werden.

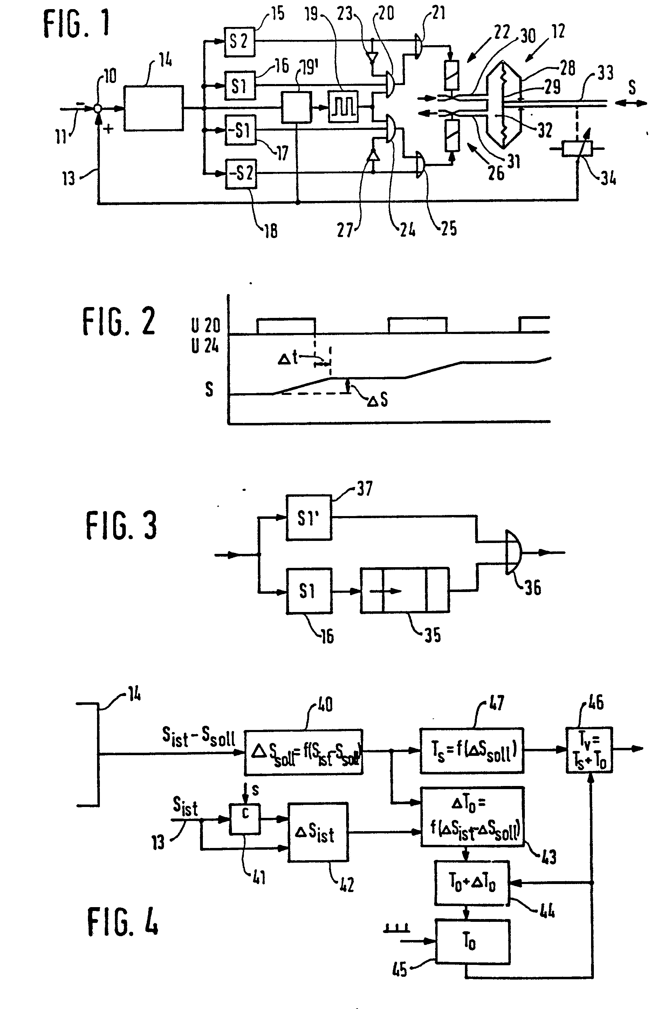

Die Wirkungsweise des in Figur 1 dargestellten Ausführungsbeispiels besteht darin, daß zunächst in an sich bekannter Weise in der Vergleichsstelle 10 der Istwert mit dem Sollwert verglichen und die Regelabweichung (Istwert - Sollwert) dem Regler 14 zugeführt wird. Dieser erzeugt ausgangsseitig eine Stellgröße für das Stellglied, durch das der Istwert auf den Sollwert überführt werden soll. Ist nun die Regelabweichung gering, so spricht keine der vier Schwellwertstufen 15 bis 18 an, und beide Magnetventile 22, 26 bleiben geschlossen. Bei größer werdender Regelabweichung in die eine oder in die andere Richtung wird dann die Schwelle S1 über- bzw. die Schwelle -S1 unterschritten und eine der Schwellwertstufen 16, 17 erzeugt ein Ausgangssignal durch das das UND-Gatter 20 bzw. das UND-Gatter 24 für die Ausgangssignale des Signalgenerators 19 passierbar wird. Durch diese Signalfolge U20 bzw. U24 wird dann das Magnetventil 22 bzw. das Magnetventil 26 intermittierend betätigt. Die Stellposition S wird dann gemäß Figur 2 in Stufen rampenförmig in Richtung des Sollwerts verändert. Dabei wird durch jedes Signal U20 bzw. U24 eine Istwertveränderung von Δ S erreicht. Infolge der Trägheit des Systems setzt die Veränderung des Istwerts relativ zum Stellsignal verzögert ein und endet ebenfalls um den Wert Δ t verzögert. Das Tastverhältnis bzw. die Signalbreite dieser Stellsignalfolge U20 bzw. U24 wird in Abhängigkeit der Regelabweichung verändert. Dies bedeutet, daß bei größerer Regelabweichung eine längere Signaldauer auftritt, als dies bei kleineren Regelabweichungen der Fall ist. Dies führt zu einer Verbesserung der Regelcharakteristik.

Vergrößert sich die Regelabweichung noch mehr, so wird je nach deren Richtung der Schwellwert S2 bzw. der Schwellwert -S2 erreicht und eine der Schwellwertstufen 15 oder 18 erzeugt ein Ausgangssignal. Durch dieses wird einmal über den Inverter 23 bzw. 27 das UND-Gatter 20 bzw. 24 gesperrt und weiterhin über das ODER-Gatter 21 bzw. 25 das Magnetventil 22 bzw. 26 ständig angesteuert. Dadurch tritt die größtmögliche Stellkraft und damit die größtmöglichste Stellgeschwindigkeit in Richtung des Sollwerts auf. Wird infolge dieser Verstellung der Schwellwert S2 wieder unter- bzw. der Schwellwert -S2 wieder überschritten, so wird die Stellkraft und die Stellgeschwindigkeit durch den intermittierenden Betrieb wieder verlangsamt.

Durch die in Figur 3 dargestellte Schaltung soll am Beispiel des Schwellwerts S1 ein hysteresebehafteter Übergang zwischen zwei Betriebsbereichen eines Magnetventils gezeigt werden, hier der Übergang von der Totzone in den intermittierenden Bereich und umgekehrt. Das gleiche Prinzip ist natürlich auch für den Übergang vom intermittierenden Bereich in den kontinuierlichen Bereich anwendbar. Der Schwellwertstufe 16 ist ein Zeitverzögerungsglied 35 zur Verzögerung des 0-1-Signalübergangs nachgeschaltet, dessen Ausgang an einen Eingang eines ODER-Gatters 36 angeschlossen ist. Eine parallel zur Schwellwertstufe 16 angesteuerte Schwellwertstufe 37 mit einem gegenüber den Schwellwert S1 etwas erhöhten Schwellwert S1' ist ausgangsseitig an einen weiteren Eingang des ODER-Gatters 36 angeschlossen, dessen Ausgang wiederum dem UND-Gatter 26 zugeführt ist.

Die Wirkungsweise des in Figur 3 dargestellten Ausführungsbeispiels besteht darin, daß bei Unterschreitung des Schwellwerts S1' durch das Ausgangssignal des Reglers 14 zunächst keine Wirkung eintritt. Der intermittierende Betrieb des Magnetventils 22 bleibt erhalten. Erst wenn der Schwellwert S1 unterschritten wird, sperrt das ODER-Gatter 36, und die Totzone ist erreicht, in der beide Magnetventile 22, 26 geschlossen sind. Wird nun der Schwellwert S1 wieder kurzzeitig überschritten, so erfolgt keine Änderung, sofern diese kurzzeitige Unterschreitung kürzer als die Verzögerungszeit des Zeitverzögerungsglieds 35 ist. Erst nach einer Überschreitung des Schwellwerts S1, die länger als die Verzögerungszeit ist, beginnt wieder der intermittierende Betrieb des Magnetventils 22. In jeden Fall beginnt er jedoch nach Überschreitung des Schwellwerts S1'. Auf diese Weise bleiben Unterschreitungen des Schwellwerts S1' und kurzzeitige Überschreitungen des Schwellwerts S1 ohne Einfluß auf das Betriebsverhalten des Magnetventils 22. Anstelle des Zeitverzögerungsglieds 35 zur Verzögerung des 0-1-Signalübergangs kann natürlich auch ein solches treten, das den 0-1-Signalübergang und/oder den 1-0-Signalübergang verzögert.

In dem in Figur 4 dargestellten Blockschaltbild ist die Erzeugung von Stellsignalen U20 und U24 mit der aus Figur 1 ersichtlichen Steuerstufe 19' zur Erzeugung des intermittierenden Betriebs gezeigt. Dazu ist zunächst das Ausgangssignal des Reglers 14, das proportional der Regelabweichung (Sist - Ssoll) ist, einem Funktionsgenerator 40 zurückgeführt. In diesem wird als Funktion der Eingangsgröße eine Sollsprungweite Δ Ssoll gebildet. Der Istwert auf der Leitung 13 wird einmal einer Speichereinrichtung 41 und zum anderen einer Differenzbildungsstufe 42 zugeführt. Mit jeder Anstiegsflanke eines Signals U20 bzw. U24 wird der vorliegende Istwert in die Speichereinrichtung 41 übernommen und der so gespeicherte Wert in der Differenzbildungsstufe 42 vom sich verändernden Istwert abgezogen. Das Ergebnis ist die Istsprungweite Δ Sist, die angibt, wie stark sich der Istwert infolge eines Signals U20 bzw. U24 verändert hat. Im Funktionsgenerator 43 wird dann als Funktion der Differenz Istsprungweite - Sollsprungweite (Δ Sist- Δ Ssoll) ein Korrekturwert Δ To gebildet. In der nachgeschalteten Addierstufe 44 wird der Korrekturwert Δ To mit einem gespeicherten Grundwert To für die Ventilansteuerzeit Tv addiert und als neuen Grundwert To in die nachgeschaltete Speichereinrichtung 45 eingespeichert. Die Einspeicherung erfolgt im Rhythmus der Signalfolge U20 bzw. U24 jeweils kurz vor Signalbeginn. Die dazu notwendige Speichertakt-Signalfolge kann zusätzlich vom Signalgenerator 19 erzeugt werden. Der neue Grundwert To wird dann in der Addierstufe 46 mit einem weiteren Korrekturwert Ts addiert, der in einen Funktiongsgenerator 47 als Funktion der Sollsprungweite Δ Ssoll erzeugt wurde.

Die somit erhaltene Ventilansteuerzeit Tv wird dann zur Steuerung der Stellsignaldauer dem Signalgenerator 19 zugeführt. Auf diese Weise wird eine optimale Wegauflösung unter Vermeidung von Regelschwingungen und bei weitgehender Unabhängigkeit von Ventildaten und Temperaturdriften erreicht.

Der Korrekturwert To kann vorteilhaft für jedes Magnetventil 22, 26 unabhängig gebildet werden. Es existiert dann je ein Wert To für das evakuierende und für das belüftende Ventil. Der in Figur 4 dargestellte Regelalgorithmus ist somit für jedes der beiden Ventile je einmal vorhanden. Kurz vor Beginn der Signalfolge U20/U24 wird der Korrekturwert To des Ventils korrigiert, welches im vorhergehenden Intervall mit einem Impuls angesteuert wurde. Die Korrektur findet nach jeder Impulsausgabe statt, auch wenn im nächsten Intervall kein Impuls ausgegeben wird.

**Patentansprüche**

1. Regelvorrichtung für die Position (S) eines druckgesteuerten Stellglieds (12), das über ein erstes Magnetventil (22) mit einer ersten Druckquelle zur Auslenkung des Stellglieds in eine erste Stellrichtung und über ein zweites Magnetventil (26) mit einer zweiten Druckquelle zur Auslenkung in eine zweite Stellrichtung verbunden ist, wobei die Magnetventile (22, 26) in Abhängigkeit der Richtung der Regelabweichung (Sist-Ssoll) alternativ betätigbar sind, und wobei ab einem ersten festlegbaren Betrag (S1 bzw. -S1) der Regelabweichung eine intermittierende Betätigung des zugeordneten Magnetventils (22 bzw. 26) und ab einem zweiten festlegbaren höheren Betrag (S2 bzw. -S2) der Regelabweichung eine Dauerbetätigung erfolgt, dadurch gekennzeichnet, daß das Tastverhältnis bzw. die Impulsdauer der Signalfolge (U20/U24) zur Steuerung des intermittierenden Betriebs als Funktion der Regelabweichung ($S_{ist}$ - $S_{soll}$) dadurch einstellbar ist, daß ein vorgegebener Grundwert ($T_o$) für die Ventilsteuerzeit ($T_v$) durch wenigstens einen variablen Korrekturwert (Δ $T_o$, $T_s$) verändert wird, wobei ein Korrekturwert (Δ $T_o$) als Funktion der Differenz von Istsprungweite (Δ $S_{ist}$) und Sollsprungweite (Δ $S_{soll}$) und/oder ein Korrekturwert (T) als Funktion der Sollsprungweite (Δ $S_{soll}$) gebildet ist, und die Istsprungweite (Δ $S_{ist}$) die tatsächliche Istwertveränderung infolge eines Impulses der Signalfolge (U20/U24) angibt und die Sollsprungweite (Δ $S_{soll}$) als Funktion der Regelabweichung ($S_{ist}$ - $S_{soll}$) gebildet ist.

2. Regelvorrichtung nach Anspruch 1, dadurch gekennzeichnet, daß der Übergang von einem Betriebsbereich eines Magnetventils (22, 26) zu einem anderen mit einer Hysterese erfolgt.

3. Regelvorrichtung nach Anspruch 2, dadurch gekennzeichnet, daß nach Überschreitung einer unteren Hystereseschwelle nach einer Zeitfunktion eine Einschaltung des jeweils anderen Betriebsbereichs erfolgt.

**Claims**

1. Control device for the position (5) of a pressure-controlled actuator (12) which is connected via a first solenoid valve (22) to a first pressure source for deflecting the actuator into a first actuating direction and via a second solenoid valve (26) to a second pressure source for deflecting in a second actuating direction, in which arrangement the solenoid valves (22, 26) can be alternatively operated in dependence on the direction of the system deviation ($S_{actual}$-$S_{nominal}$), and in which arrangement an intermittent operation of the associated solenoid valve (22 or 26) takes place from a first determinable amount (81 or -81) of the system deviation and a continuous operation takes place from a second determinable higher amount (82 or -82) of the system deviation, characterized in that the duty ratio or the pulse duration of the signal sequence (U20/U24) can be adjusted for controlling the intermittent operation as a function of the system deviation ($S_{actual}$-$S_{nominal}$) by changing a predetermined basic value ($T_o$) for the valve control time ($T_v$) by at least one variable correction value (Δ $T_o$, $T_s$), in which arrangement a correction value (Δ $T_o$) is formed as a function of the difference between actual jump displacement (Δ $S_{actual}$) and nominal jump displacement (Δ $S_{nominal}$) and/or a correction value ($T_s$) is formed as a function of the nominal jump displacement (Δ $S_{nominal}$) and the actual jump displacement (Δ$S_{actual}$) specifies the actual change in actual value as a consequence of a pulse of the signal sequence (U20/U24) and the nominal jump displacement (Δ $S_{nominal}$1) is formed as a function of the system deviation ($S_{actual}$-$S_{nominal}$).

2. Control device according to Claim 1, characterized in that the transition from one operating range of a solenoid valve (22, 26) to another takes place with a hysteresis.

3. Control device according to Claim 2, characterized in that, after a lower hysteresis threshold has been exceeded, a switching on of the other operating range in each case takes place in accordance with a timing function.

**Revendications**

1.- Dispositif de régulation pour la position (S) d'un organe de réglage (12) commandé par pression, dispositif qui est relié par l'intermédiaire d'une première soupape électromagnétique (22) à une première source de pression pour dévier l'organe de réglage dans une première direction de réglage, et qui est relié par l'intermédiaire d'une seconde soupape électromagnétique (26) à une seconde source de pression pour dévier l'organe de réglage dans une deuxième direction de réglage, les soupapes electromagnétiques (22, 26) étant susceptibles d'être alternativement actionnées en fonction de la direction de l'écart de réglage ($S_{ist}$ - $S_{soll}$), tandis qu'à partir d'une première valeur susceptible d'être fixée (S1 ou bien - S1) de l'écart de réglage, un actionnenent intermittent de la soupape électromagnétique correspondante (22 ou bien 26) est effectué, et qu'à partir d'une seconde valeur plus élevée susceptible d'être fixée (S2 ou bien -S2) de l'écart de réglage, un actionneient permanent est effectué, dispositif caractérisé en ce que le taux d'impulsions ou bien la durée des impulsions, de la succession de signaux (U20/ U24) pour commander la marche intermittente en fonction de l'écart de réglage ($S_{ist}$ - $8_{soll}$) est susceptible d'être réglé du fait qu'une valeur de base prédéfinie ($T_o$) pour le temps de la commande de la soupape ($T_v$) est modifiée par au moins une valeur de correction variable ($\Delta T_o$, $T_s$), une valeur de correction ($T_o$) étant établie en fonction de la difference entre l'ampleur de la variation réelle ($\Delta S_{ist}$) et l'ampleur de la variation théorique ($\Delta S_{soll}$) et/ou une valeur de correction ($T_8$) étant établie en fonction de l'ampleur de la variation théorique ($\Delta S_{soll}$), l'ampleur de la variation réelle ($\Delta S_{ist}$) indiquant la modification effective de la valeur réelle à la suite d'une impulsion de la succession de signaux (U20/U24), tandis que l'ampleur de la variation théorique ($\Delta S_{soll}$) est établie en fonction de l'écart de réglage ($S_{ist}$ - $S_{soll}$).

2.- Dispositif de régulation selon la revendication 1, caractérisé en ce que le passage d'un domaine de fonctionnement d'une soupape électromagnétique (22, 26) à un autre domaine de fonctionnement, s'effectue avec une certaine hystérésis.

3.- Dispositif de régulation selon la revendication 2, caractérisé en ce qu'après dépassement d'un seuil inférieur d'hystérésis, selon une fonction du temps, un enclenchement de l'autre domaine de fonctionnement est effectué.

**FIG. 1**

**FIG. 2**

**FIG. 3**

**FIG. 4**